# EUROPEAN PATENT APPLICATION

(11) **EP 1 798 585 A2**
(43) Date of publication of application: **20.06.2007**
(21) Application number: 06119972.5
(22) Date of filing: 01.09.2006
(51) Int. Cl.: G02B 26/08

(54) **Two-axis scanner**

(30) Priority: 15.12.2005 KR 20050123985
(71) Applicant: Samsung Electronics Co., Ltd., Suwon-si, Gyeonggi-Do (KR)
(72) Inventor: Kang, Seok-jin, Suwon-shi Gyeonggi-do (KR)
(74) Representative: Zimmer, Franz-Josef

(57) **Abstract**

Provided is a two-axis scanner. The two-axis scanner includes: a base; a stage disposed on the base; and a stage actuator that is disposed between the base and the stage and moves the stage along two axes. The stage actuator includes: a first stationary part having a predetermined shape; a horizontally movable frame surrounding the first stationary part, wherein a first horizontal deformable torsion spring is disposed between the first stationary part and the horizontally movable frame; a horizontal driver actuating the horizontally movable frame in a horizontal scanning direction; an auxiliary frame surrounding the horizontally movable frame, wherein a first vertical deformable torsion spring is disposed between the horizontally movable frame and the auxiliary frame; a vertically movable frame surrounding the auxiliary frame, wherein a second horizontal deformable torsion spring is disposed between the auxiliary frame and the vertically movable frame; a second stationary part at both sides of the vertically movable frame in a first direction, wherein a second vertical deformable torsion spring is disposed between the vertically movable frame and the second stationary part; and a vertical driver vertically actuating the vertically movable frame. The stage is disposed on the auxiliary frame.

## Description

### BACKGROUND OF THE INVENTION

### 1. Field of the Invention

The present invention relates to a two-axis scanner using a Micro Electro-Mechanical System (MEMS), and more particularly, to a two-axis scanner that can be actuated in a seesaw fashion and prevent interferences between vertical and horizontal scanning.

### 2. Description of the Related Art

A two-axis scanner can be used efficiently for a large display device. In this case, it is important to move a stage of the scanner in such a way to prevent interference between horizontal and vertical scanning when the two-axis scanner performs scanning in both vertical and horizontal directions. In a conventional two-axis scanner, to prevent scanning interference, a stationary comb electrode for horizontal scanning should be driven together with a movable comb electrode for horizontal scanning. However, this increases the actuation load.

The conventional two-axis scanner also requires a double-layered torsion spring or complicated electrically isolated portions at the torsion spring in order to apply a voltage to the stationary comb electrode moving together with the movable comb electrode.

### SUMMARY OF THE INVENTION

The present invention provides a two-axis scanner that can prevent scanning interference during two-axis scanning.

The present invention also provides a two-axis scanner that reduces the load on an actuator by separating a stationary comb electrode of a horizontal actuator from the actuator and allows easy installation of electrical wires.

According to an aspect of the present invention, there is provided a two-axis scanner including: a base; a stage disposed above the base; and a stage actuator that is disposed between the base and the stage and moves the stage along two axes. The stage actuator includes: a first stationary part having a predetermined shape; a horizontally movable frame surrounding the first stationary part , wherein a first horizontal deformable torsion spring is disposed between the first stationary part and the horizontally movable frame; a horizontal driver actuating the horizontally movable frame in a horizontal scanning direction; an auxiliary frame surrounding the horizontally movable frame, wherein a first vertical deformable torsion spring is disposed between the horizontally movable frame and the auxiliary frame; a vertically movable frame surrounding the auxiliary frame, wherein a second horizontal deformable torsion spring is disposed between the auxiliary frame and the vertically movable frame; a second stationary part at both sides of the vertically movable frame in a first direction, wherein a second vertical deformable torsion spring is disposed between the vertically movable frame and the second stationary part; and a vertical driver vertically actuating the vertically movable frame. The stage is disposed on the auxiliary frame.

The horizontal driver includes a first stationary comb electrode extending from either side of the first stationary part in the first direction and a first movable comb electrode extending from the horizontally movable frame in a staggered fashion relative to the first stationary comb electrode.

The two-axis scanner further includes a third stationary part disposed in a second direction at both sides of the vertically movable frame. The vertical driver includes a second movable comb electrode extending outwardly from either side of the vertically movable frame in the second direction and a second stationary comb electrode extending from the third stationary part in a staggered fashion relative to the second movable comb electrode.

The base may include first through third anchors fixing the first through third stationary parts, respectively. The height of the first anchor may be different from the height of the second and third anchors.

The first stationary part may have a rectangular shape while the horizontally movable frame, the auxiliary frame, and the vertically movable frame may have a rectangular frame shape. The torsion springs may be beams having a height greater than a width.

The first stationary part may have an electrically isolated portion that is elongated in the second direction and isolates a first stationary comb electrode disposed at either side of the first stationary part.

The stage actuator may be made by patterning a silicon substrate. The stage may be separated above the auxiliary frame by connecting portions so as not to contact the rotating horizontally movable frame.

According to another embodiment of the present invention, the two-axis scanner may include: a base; a stage disposed above the base; and a stage actuator that is disposed between the base and the stage and moves the stage along two axes. The stage actuator may include: a first stationary part elongated in a second direction; first portions elongated in the second direction on either side of the first stationary part; a horizontally movable frame surrounding the first stationary part and the first portions, wherein a first horizontal deformable torsion spring is disposed between the first stationary part and the horizontally movable frame; a horizontal driver actuating the horizontally movable frame in a horizontal scanning direction; an auxiliary frame surrounding the horizontally movable frame, wherein a first vertical deformable torsion spring is disposed between the horizontally movable frame and the auxiliary frame; a vertically movable frame surrounding the auxiliary frame, wherein a second horizontal deformable torsion spring is disposed between the auxiliary frame and the vertically movable frame; a second stationary part at both sides of the vertically movable frame in a first direction, wherein a second vertical deformable torsion spring is disposed between the vertically movable frame and the second stationary part; and a vertical driver vertically actuating the vertically movable frame. The stage is disposed on the auxiliary frame.

### BRIEF DESCRIPTION OF THE DRAWINGS

The above and other features and advantages of the present invention will become more apparent by describing in detail exemplary embodiments thereof with reference to the attached drawings in which:
FIG. 1 is a perspective view showing a two-axis scanner according to an embodiment of the present invention;
FIG. 2 is a plan view of FIG. 1;
FIG. 3 is a cross-sectional view taken along line III-III of FIG. 2;
FIG. 4 is a cross-sectional view taken along line IV-IV of FIG. 2;
FIG. 5 is a perspective view of a torsion spring of FIG.1;
FIG. 6 is a cross-sectional view of the stage actuator of FIG. 1 for explaining an initial actuation of the two-axis scanner of FIG. 1, according to an embodiment of the present invention;
FIG. 7 is a plan view of the two-axis scanner of FIG. 1 for explaining an electrical path of the two-axis scanner according to an embodiment of the present invention;
FIG. 8 is a plan view of a two-axis scanner according to another embodiment of the present invention; and
FIGS. 9 and 10 are cross-sectional views taken along lines IX-IX and X-X of FIG. 8.

### DETAILED DESCRIPTION OF THE INVENTION

Two-axis scanners according to preferred embodiments of the present invention will now be described with reference to the attached drawings. In the drawings, some elements may be exaggerated for clarity or omitted to avoid complexity and to aid in the understanding of the present invention. This is not intended to limit the technical scope of the present invention.

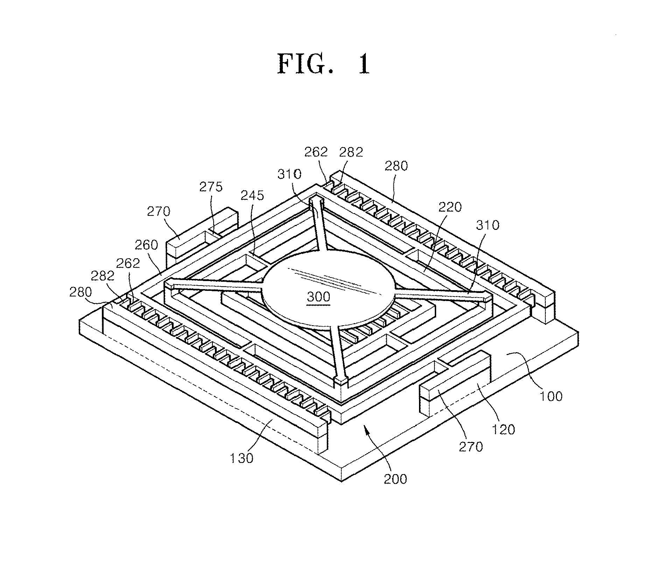

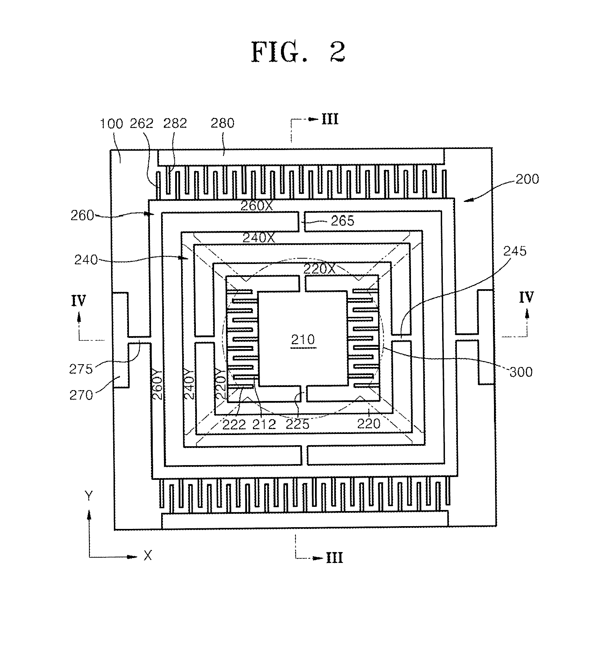

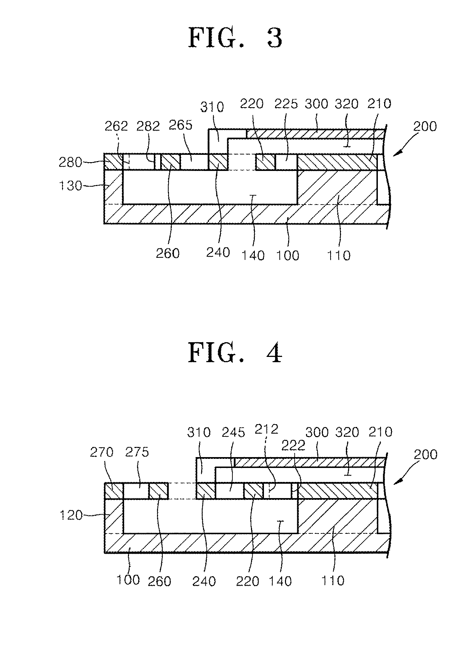

FIG. 1 is a schematic perspective view of a two-axis scanner according to an embodiment of the present invention. FIG. 2 is a plan view of FIG. 1 and FIGS. 3 and 4 are cross-sectional views taken along lines III-III and IV-IV of FIG. 2, respectively. For convenience' sake, a stage 300 of the two-axis scanner is indicated by a dotted line in FIG. 2.

Referring to FIGS. 1-4, the two-axis scanner includes a base 100, a stage actuator 200 disposed on the base 100, and a stage 300 disposed on the stage actuator 200.

Light is scanned across the surface of the stage 300 that is connected to connecting portions 310 and disposed above an auxiliary frame 240 that will be described later. The connecting portions 310 provide a space 320 for rotating a horizontally movable frame that will be described below. The stage 300 is moved in two directions by the underlying stage actuator 200.

The base 100 may be a Pyrex glass substrate. A first anchor 110 is disposed on a central portion of the base 100. Second anchors 120 are disposed on either side of the first anchor 110 in a first direction (X), while third anchors 130 are formed on either side of the first anchor 110 in a second direction (Y). The first through third anchors 110, 120, and 130 may be formed integrally with the base 100. The first and second directions (X) and (Y) refer to directions in which the scanner scans light horizontally and vertically, respectively.

The stage actuator 200 includes first through third stationary parts 210, 270, and 280, a horizontally movable frame 220, an auxiliary frame 240, and a vertically movable frame 260. The stage actuator 200 is made by patterning a single silicon substrate and is a conductive substrate to which an external voltage is applied. A space 140 for rotating the horizontally movable frame 220, the auxiliary frame 240, and the vertically movable frame 260 is formed between the first anchor 110 and both the second and third anchor 120 and 130.

The first stationary part 210 is connected and attached to the first anchor 110. A first stationary comb electrode 212 extends outwardly from two opposing sides of the first stationary part 210 in the first direction (X).

The horizontally movable frame 220 has a rectangular shape surrounding the first stationary part 210. The horizontally movable frame 220 includes two first portions 220X parallel to the first direction (X) and two second portions 220Y parallel to the second direction (Y). A first horizontal deformable torsion spring 225 is disposed between the first portion 220X of the horizontally movable frame 220 and the first stationary part 210. The first horizontal deformable torsion spring 225 is a beam that is more easily deformed in the first direction (X) than in the second direction (Y). A first movable comb electrode 222 extends from the second portion 220Y of the horizontally movable frame 220 facing the first stationary comb electrode 212 in a staggered fashion relative to the first stationary comb electrode 212.

The auxiliary frame 240 has a rectangular shape surrounding the horizontally movable frame 220. The auxiliary frame 240 includes two first portions 240X parallel to the first direction (X) and two second portions 240Y parallel to the second direction (Y). A first vertical deformable torsion spring 245 is disposed between the second portion 240Y of the auxiliary frame 240 and the second portion 220Y of the horizontally movable frame 220. The first vertical deformable torsion spring 245 is a beam that can be more easily deformed in the second direction (Y) than in the first direction (X).

The vertically movable frame 260 has a rectangular shape surrounding the auxiliary frame 240. The vertically movable frame 260 includes two first portions 260X parallel to the first direction (X) and two second portions 260Y parallel to the second direction (Y). A second horizontal deformable torsion spring 265 is disposed between the first portion 260X of the vertically movable frame 260 and the first portion 240X of the auxiliary frame 240. The second horizontal deformable torsion spring 265 is a beam that is more easily deformed in the first direction (X) than in the second direction (Y). A second movable comb electrode 262 extends outwardly from the first portion 260X of the vertically movable frame 260.

The second stationary part 270 is fixedly attached onto the second anchors 120 at either side of second portion 260Y of the vertically movable frame 260. A second vertical deformable torsion spring 275 is disposed between the second stationary part 270 and the vertically movable frame 260.

The third stationary part 280 is fixedly attached onto the third anchors 100 at either side of the first portion 260X of the vertically movable frame 260. A second stationary comb electrode 282 extends from the third stationary part 280 facing the second movable comb electrode 262 in a staggered fashion relative to the second movable comb electrode 262.

The torsion springs 225, 245, 265, and 275 may be beams having a height h₀ greater than a width b₀ as shown in FIG, 5. That is, the torsion springs 225, 245, 265, and 275 should be designed such that the stage 300 can rotate only in a predetermined direction. To effectively achieve this, the torsion springs 225, 245, 265, and 275 must have higher bending stiffness against bending in a direction of a rotary axis than torsion stiffness in a direction of a torsion axis.

The first movable comb electrode 222 and the first stationary comb electrode 212 form a horizontal driver rotating the horizontally movable frame 220 in the first direction (X). When the horizontal driver rotates the horizontally movable frame 220 in the first direction (X), the auxiliary frame 240 coupled to the horizontally movable frame 220 by the first vertical deformable torsion spring 245 rotates also in the first direction (X), thus causing the stage 300 to rotate in the first direction (X). In this case, because the first vertical deformable torsion spring 245 has high bending stiffness, the horizontally movable frame 220 and the auxiliary frame 240 rotate together about the first and second horizontal deformable torsion springs 225 and 265 in the first direction (X).

The second movable comb electrode 262 and the second stationary comb electrode 282 form a vertical driver rotating the vertically movable frame 260 in the second direction (Y). When the vertical driver rotates the vertically movable frame 260 in the second direction (Y), the auxiliary frame 240 coupled to the vertically movable frame 260 by the second horizontal deformable torsion spring 265 rotates also in the second direction (Y), thus causing the stage 300 to rotate in the second direction (Y). In this case, because the second horizontal deformable torsion spring 265 has high bending stiffness, the vertically movable frame 260 and the auxiliary frame 240 rotate together about the first and second vertical deformable torsion springs 245 and 275 in the second direction (Y). Furthermore, since the first vertical deformable torsion spring 245 can be easily deformed, the rotational force of the auxiliary frame 240 is not transferred to the horizontally movable frame 220. Thus, the two-axis scanner according to the current embodiment can perform horizontal and vertical scan independently.

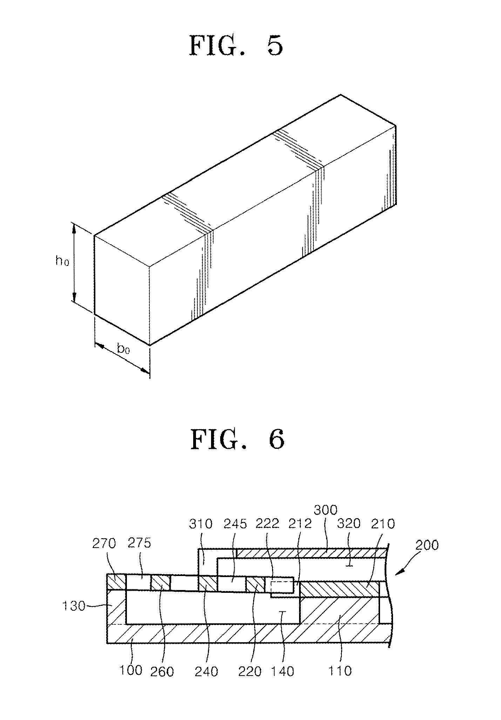

FIG. 6 is a cross-sectional view for explaining initial actuation of the two-axis scanner according to the embodiment shown in FIG. 1. Referring to FIG. 6, when the first anchor 110 is lower than the second and third anchors 120 and 130 and the base 100 is anodically bonded to the stage actuator 200, there is a height difference between the first stationary comb electrode 212 and the first movable comb electrode 222. Thus, when a predetermined voltage is applied between the first stationary comb electrode 212 and the first movable comb electrode 222, the first movable comb electrode 222 is moved downward. The same applies to the second movable comb electrode 262 and the second stationary comb electrode 282. A vertical height difference between electrodes facilitates the initial actuation of the two-axis scanner with the stage actuator 200 made from a single substrate.

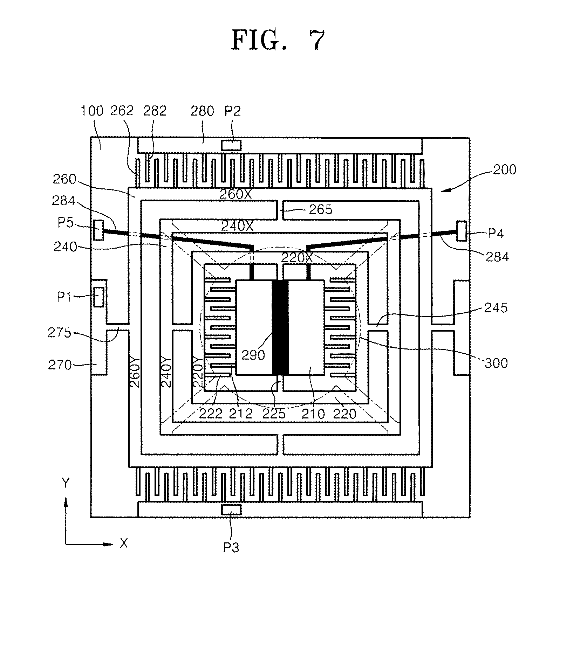

In the current embodiment, the horizontal driver and the vertical driver respectively require three electrical paths for two-axis movement of the stage 300. When ground is kept at the same potential, five electrical paths are required. FIG. 7 is a plan view for explaining an electrical path of the two-axis scanner of FIG. 1 according to an embodiment of the present invention. A dark portion 290 denotes an electrically isolated portion and reference characters P1 through P5 denote electrode pads for connections to an external circuit. Reference numeral 284 denotes a conductive wire for connecting the electrode pads P4 and P5 with the first stationary comb electrode 212.

Referring to FIG. 7, the electrode pad P1 is disposed on the second stationary part 270 and a voltage applied to the electrode pad P1, e.g., a ground voltage, is applied to the first and second movable comb electrodes 222 and 262 through the torsion springs 245, 265, and 275 and the frames 220, 240, and 260. The electrode pads P2 and P3 are disposed on the third stationary part 280 and are electrically coupled to the second stationary comb electrodes 282, respectively. The electrode pads P4 and P5 are electrically connected to the first stationary comb electrode 212 at either side of the first stationary part 210 through the electrical wires 284. The conductive wires 284 are disposed on the base 100. The electrically isolated portion 290 prevents the first horizontal deformable torsion spring 225 from being electrically connected to the first stationary part 210.

The operation of the two-axis scanner according to the present embodiment of the present invention will now be described in more detail. First, when a ground voltage is applied to the electrode pad P1 and a predetermined voltage is applied to the electrode pad P4, an electrostatic force is created between the first stationary comb electrode 212 and the first movable comb electrode 222, thereby causing the horizontally movable frame 220 to rotate in the positive X direction. When the voltage applied to the electrode pad P4 is removed, a restoring force exerted by the first and second horizontal deformable torsion springs 265 causes the horizontally movable frame 220 to return to the original position. In this way, the auxiliary frame 240 and the stage 300 connected to the horizontally movable frame 220 rotate. Conversely, application of a voltage to the electrode pad P5 causes the stage 300 to rotate in the negative X direction. Because the horizontal actuation of the stage 300 does not affect the vertically movable frame 260, a displacement in the first direction (X) between the second movable comb electrode 262 and the second stationary comb electrode 282 does not occur.

Furthermore, when a predetermined voltage is applied to the electrode pad P2, an electrostatic force is created between the second movable comb electrode 262 and the second stationary comb electrode 282, thereby causing the vertically movable frame 260 to rotate in the positive Y direction. Conversely, application of a voltage to the electrode pad P3 causes the vertically movable frame 260 to rotate in the negative Y direction. In this way, the auxiliary frame 240 and the stage 300 connected to the horizontally movable frame 220 are vertically actuated. Because the vertical actuation of the stage 300 does not affect the horizontally movable frame 220, a displacement in the second direction (Y) between the first movable comb electrode 222 and the first stationary comb electrode 212 does not occur.

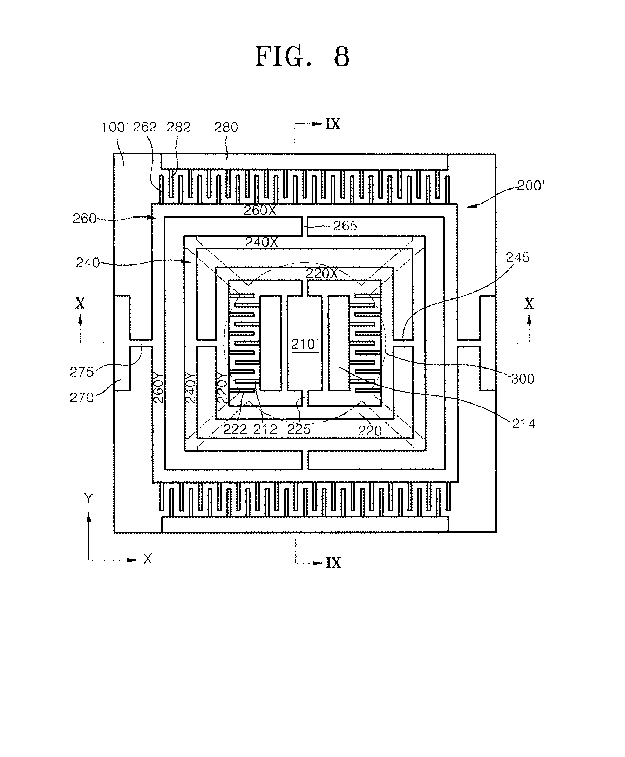

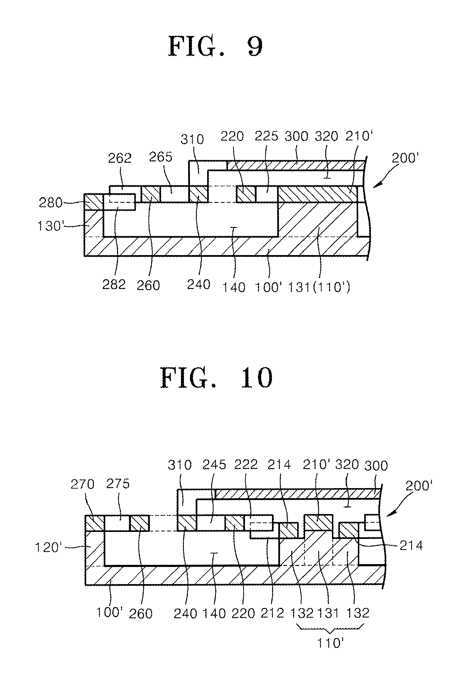

FIG. 8 is a plan view of a two-axis scanner according to another embodiment of the present invention and FIGS. 9 and 10 are cross-sectional views taken along lines IX-IX and X-X of FIG. 8. Like reference numerals in FIGS. 1 through 7 and FIGS. 8 through 10 denote like elements, and a repetitive description will be omitted.

Referring to FIGS. 8-10, the two-axis actuating scanner according to the current embodiment includes a base 100' a stage actuator 200' disposed on the base 100', and a stage 300 disposed on the stage actuator 200'.

The base 100' includes first through third anchors 110', 120', and 130. The first anchor 110' consists of a central portion 131 elongated in the second direction (Y) and two lateral portions 132 formed from either side of the central portion 131 to a predetermined depth.

A first stationary part 210' is disposed on the central portion 131 and the first horizontal deformable torsion spring 225 is connected to the first stationary part 210'. A first portion 214 for fixing a first stationary comb electrode 212 is formed on the two lateral portions 132. Like the lateral portions 132, the third anchor 130' may be lower than the central portion 131 of the first anchor 110'. Thus, a second stationary comb electrode 282 attached to the third stationary part 280 fixed onto the third anchor 130' has a height that is different than that of a second movable comb electrode 262. The second anchor 120' has a height equal to the height of the central portion 131 of the first anchor 110'.

In the current embodiment, because the first and second stationary comb electrodes 212 and 282 have a height that is different than the height of the first and second movable comb electrodes 222 and 262, easy initial actuation is achieved based on an electrostatic force.

Furthermore, because the first stationary part 210' is physically isolated from the first portion 214, a voltage applied to the first and second movable comb electrodes 222 and 262 is not applied to the first stationary comb electrode 212.

Because the rest of the structure and operation of the two-axis scanner of the current embodiment is substantially the same as in the previous embodiment, a detailed description thereof will not be given.

As described above, a two-axis scanner according to embodiments of the present invention includes an auxiliary frame disposed between an vertically movable frame and a horizontally movable frame, thus preventing interference between the vertical and horizontally movable frames. Thus, no interference occurs between comb electrodes for horizontal and vertical actuation during two-axis scanning.

The present invention also provides a high-precision scanner because a stage actuator is formed by patterning a single silicon substrate. Furthermore, because stationary comb electrodes are fixed to a base disposed below the stage actuator, actuator load is reduced, thereby increasing the actuating power.

The two-axis scanner can be efficiently utilized as an optical scanner for a display device requiring high-speed horizontal and vertical scanning.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A two-axis scanner comprising:
a base;
a stage disposed above the base; and
a stage actuator that is disposed between the base and the stage and moves the stage along two axes,
wherein the stage actuator comprises:
a first stationary part having a predetermined shape;
a horizontally movable frame surrounding the first stationary part, wherein a first horizontal deformable torsion spring is disposed between the first stationary part and the horizontally movable frame;
a horizontal driver actuating the horizontally movable frame in a horizontal scanning direction;
an auxiliary frame surrounding the horizontally movable frame, wherein a first vertical deformable torsion spring is disposed between the horizontally movable frame and the auxiliary frame;
a vertically movable frame surrounding the auxiliary frame, wherein a second horizontal deformable torsion spring is disposed between the auxiliary frame and the vertically movable frame;
a second stationary part at both sides of the vertically movable frame in a first direction, wherein a second vertical deformable torsion spring is disposed between the vertically movable frame and the second stationary part; and
a vertical driver vertically actuating the vertically movable frame, and
wherein the stage is disposed on the auxiliary frame.

2. The scanner of claim 1, wherein the horizontal driver comprises:
a first stationary comb electrode extending from either side of the first stationary part in the first direction; and a first movable comb electrode extending from the horizontally movable frame in a staggered fashion relative to the first stationary comb electrode.

3. The scanner of claim 1, further comprising a third stationary part disposed in a second direction at both sides of the vertically movable frame,
wherein the vertical driver comprises:
a second movable comb electrode extending outwardly from either side of the vertically movable frame in the second direction; and
a second stationary comb electrode extending from the third stationary part in a staggered fashion relative to the second movable comb electrode.

4. The scanner of claim 1, wherein the base includes first through third anchors respectively fixing the first through third stationary parts.

5. The scanner of claim 4, wherein a height of the first anchor is different from a height of the second and third anchors.

6. The scanner of claim 1, wherein the first stationary part has a rectangular shape, while the horizontally movable frame, the auxiliary frame, and the vertically movable frame have a rectangular frame shape.

7. The scanner of claim 1, wherein the torsion springs are beams having a height greater than a width.

8. The scanner of claim 1, wherein the first stationary part has an electrically isolated portion that is elongated in the second direction and isolates a first stationary comb electrode disposed at either side of the first stationary part.

9. The scanner of claim 1, wherein the stage actuator is made by patterning a silicon substrate.

10. The scanner of claim 1, wherein the stage is separated above the auxiliary frame by a connecting portion so as not to contact the rotating horizontally movable frame.

11. A two-axis scanner comprising:
a base;
a stage disposed above the base; and
a stage actuator that is disposed between the base and the stage and moves the stage along two axes,
wherein the stage actuator comprises:
a first stationary part elongated in a second direction;
first portions elongated in the second direction on either side of the first stationary part;
a horizontally movable frame surrounding the first stationary part and the first portions, wherein a first horizontal deformable torsion spring is disposed between the first stationary part and the horizontally movable frame;
a horizontal driver actuating the horizontally movable frame in a horizontal scanning direction;
an auxiliary frame surrounding the horizontally movable frame, wherein a first vertical deformable torsion spring is disposed between the horizontally movable frame and the auxiliary frame;
a vertically movable frame surrounding the auxiliary frame, wherein a second horizontal deformable torsion spring is disposed between the auxiliary frame and the vertically movable frame;
a second stationary part at both sides of the vertically movable frame in a first direction, wherein a second vertical deformable torsion spring is disposed between the vertically movable frame and the second stationary part;; and
a vertical driver vertically actuating the vertically movable frame, and
wherein the stage is disposed on the auxiliary frame.

12. The scanner of claim 11, wherein the horizontal driver comprises:
a first stationary comb electrode extending outwardly from the first portions in the first direction; and
a first movable comb electrode extending from the horizontally movable frame in a staggered fashion relative to the first stationary comb electrode.

13. The scanner of claim 11, further comprising a third stationary part disposed in a second direction at both sides of the vertically movable frame,
wherein the vertical driver comprises:
a second movable comb electrode extending outwardly from either side of the vertically movable frame in the second direction; and
a second stationary comb electrode extending from the third stationary part in a staggered fashion relative to the second movable comb electrode.

14. The scanner of claim 11, wherein the base includes first through third anchors respectively fixing the first through third stationary parts.

15. The scanner of claim 14, wherein the first anchor has a central portion fixing the first stationary part and two lateral portions fixing the first portions, the central portion being higher than the two lateral portions,
wherein the second anchor has the same height as the central portion of the first anchor, and
wherein the third anchor fixing the third stationary part is lower than the central portion of the first anchor.

16. The scanner of claim 11, wherein the first stationary part and the first portions have a rectangular shape and the horizontally movable frame, the auxiliary frame, and the vertically movable frame have a rectangular frame shape.

17. The scanner of claim 11, wherein the torsion springs are beams having a height greater than a width.

18. The scanner of claim 11, wherein the stage actuator is made by patterning a silicon substrate.

19. The scanner of claim 11, wherein the stage is separated above the auxiliary frame by connecting portions so as not to contact the rotating horizontally movable frame.
